# EUROPÄISCHE PATENTANMELDUNG

(11) **EP 2 756 915 A1**
(43) Veröffentlichungstag der Anmeldung: **23.07.2014**
(21) Anmeldenummer: 13151888.8
(22) Anmeldetag: 18.01.2013
(51) Int. Cl.: B23P 6/00, B23P 6/04, B23K 26/34

(54) **Auftragsschweißen mit vorherigem Umschmelzen**

(71) Anmelder: Siemens Aktiengesellschaft, 80333 München (DE)
(72) Erfinder: Burbaum, Bernd, 14612 Falkensee (DE); Melzer-Jokisch, Torsten, 15366 Neuenhagen bei Berlin (DE); Ott, Michael, 45470 Mülheim an der Ruhr (DE); Piegert, Sebastian, 10777 Berlin (DE)

(57) **Zusammenfassung**

Durch das vorherige Umschmelzen eines Substrats (4) vor einer Auftragsschweißung werden Spannungen im Bereich des Interfaces zwischen Auftragsschweißung (13) und Substrat (4) deutlich reduziert.

## Beschreibung

Die Erfindung betrifft ein Auftragsschweißverfahren, bei dem vorab ein Umschmelzen zumindest teilweise im Bereich dieser Fläche durchgeführt wird, auf der Material aufgetragen wird.

Umschmelzverfahren zum Schließen von Rissen und Auftragsschweißverfahren, um einen Materialverlust auszugleichen oder Struktur auf einer Oberfläche aufzubauen sind Stand der Technik, ebenso ist die Verwendung eines Lasers bei diesen Verfahren.

Auch ist es Stand der Technik, kolumnar erstarrte Substrate oder einkristalline Substrate, wie sie bei nickelbasierten Superlegierungen von Turbinenschaufeln auftreten, umzuschmelzen.

Oft kommt es jedoch im Randbereich der Schweißung zu erhöhten Spannungen zwischen Substrat und aufgetragenem Bereich.

Es ist daher Aufgabe der Erfindung o. g. Problem zu lösen. Die Aufgabe wird gelöst durch ein Verfahren gemäß Anspruch 1 und ein Bauteil gemäß Anspruch 15, wodurch Spannungen reduziert werden.

In den Unteransprüchen sind weitere vorteilhafte Maßnahmen aufgelistet, die beliebig miteinander kombiniert werden können, um weitere Vorteile zu erzielen.

Es zeigen:
- Figur 1: ein Substrat,
- Figur 2: ein Substrat mit einem umgeschmolzenen Bereich,
- Figur 3: ein Substrat gemäß Figur 2 mit einer Auftragsschweißung,
- Figur 4 - 7: Ausführungsbeispiele für den umzuschmelzenden Bereich,
- Figur 8: eine Liste von Superlegierungen.

Die Figuren und die Beschreibung stellen nur Ausführungsbeispiele der Erfindung dar.

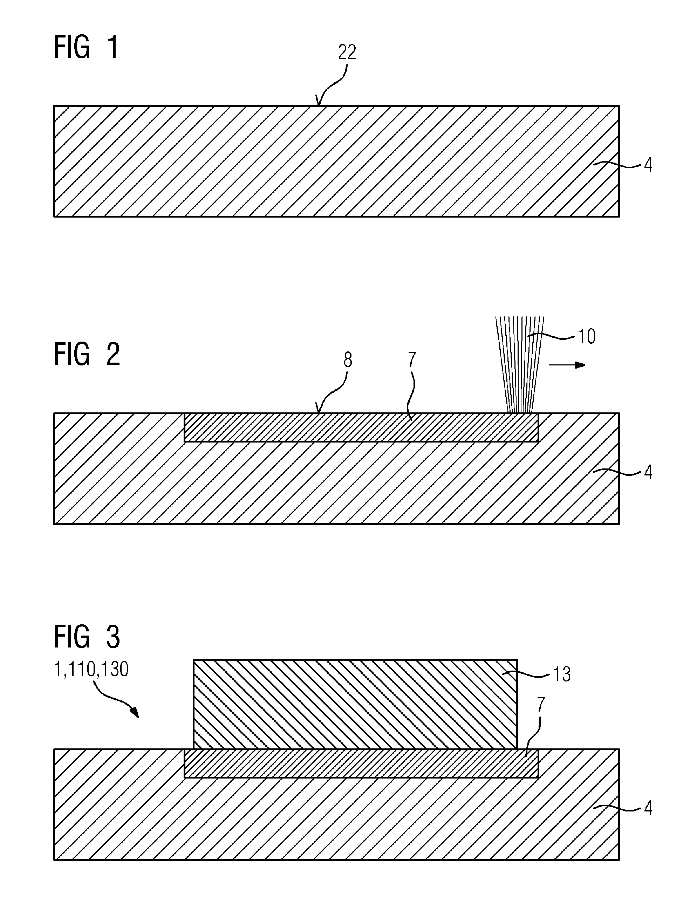

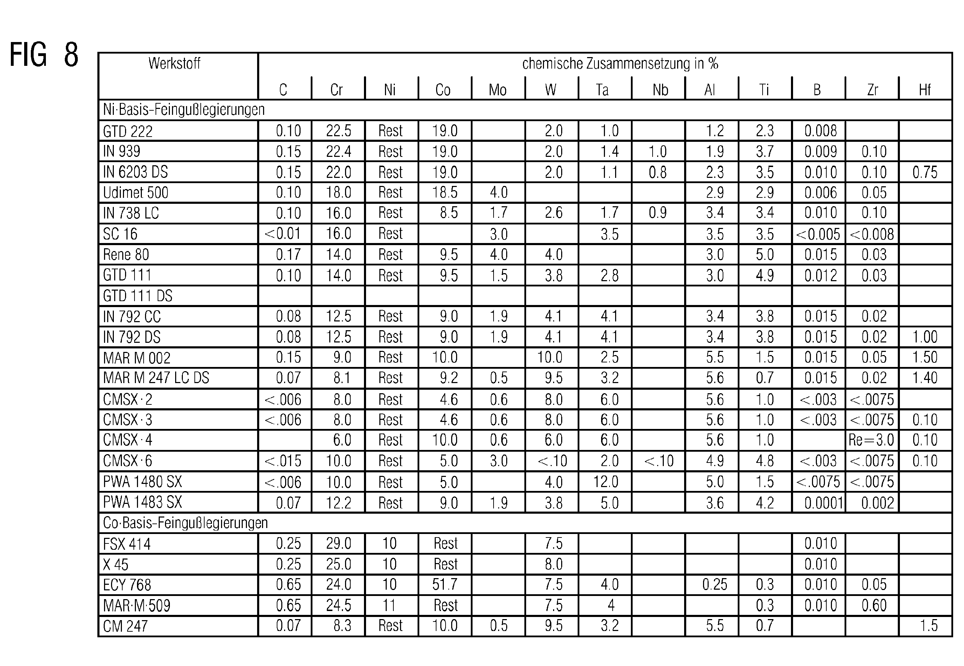

Figur 1 zeigt ein Substrat 4, das zu bearbeiten ist. Das Substrat 4 ist vorzugsweise metallisch und weist ganz vorzugsweise eine kobalt- oder nickelbasierte Superlegierung auf, wie sie insbesondere in Figur 8 aufgelistet ist.

Das Substrat 4 kann ebenso eine einkristalline, kolumnar erstarrte Struktur oder eine polykristalline Struktur aufweisen.

Eine kolumnare Struktur weist Korngrenzen auf, die oft von einer Auftragsschweißung erfasst werden.

Auf einen Oberflächenbereich 8 (Fig. 2) der Oberfläche 22 soll ein Material 13 (Fig. 3) mittels Auftragsschweißung aufgetragen werden.

Zur Vorbereitung dieser Auftragsschweißung wird vorab in dem zu schweißenden Oberflächenbereich 8 zumindest teilweise ein Umschmelzverfahren durchgeführt.

Dies erfolgt durch einen energiereichen Strahl, wie z.B. durch einen Schweißstrahl 10 oder insbesondere einen Laserstrahl 10 der innerhalb bis zu einer gewissen Tiefe des Substrats 4 einen Umschmelzbereich 7 erzeugt, und feine Körner erzeugt.

Bei diesem Umschmelzprozess wird kein Material aufgetragen und dieser Prozess wird vor dem Auftragsschweißen vorzugsweise vollständig durchgeführt.

Nachdem das Umschmelzen durchgeführt ist, wird gemäß Figur 3 eine Auftragsschweißung 13 oberhalb des umgeschmolzenen Bereichs 7 aufgetragen.

Dies kann auf vielfältige Art und Weise erfolgen, insbesondere durch ein Laserauftragsschweißen.

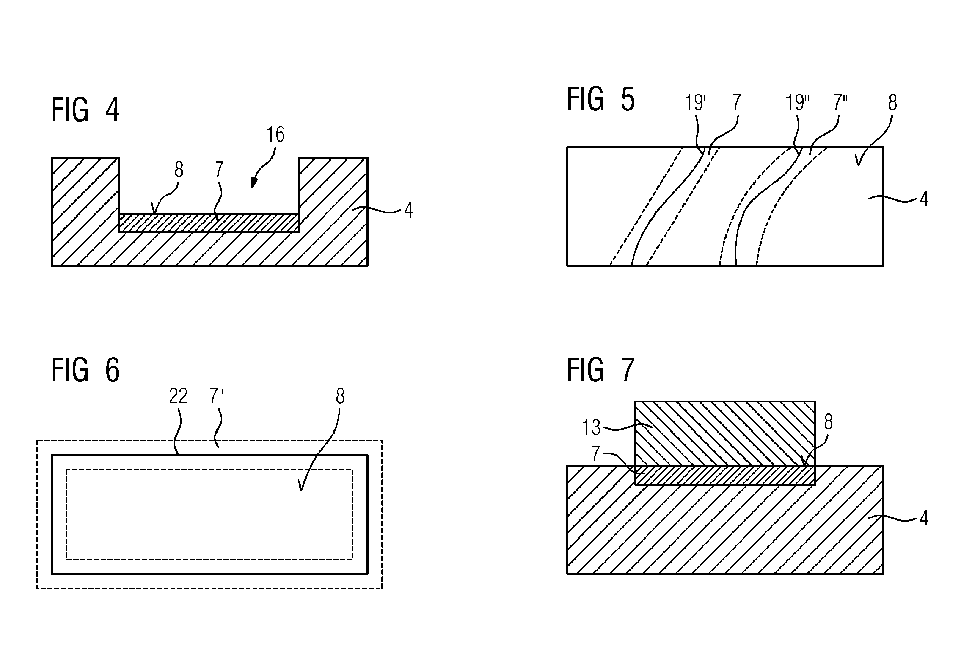

Der Umschmelzbereich 7, auf dem die Auftragsschweißung 13 durchgeführt wird, kann vollständig und vorzugsweise genau passend (Fig. 7) umgeschmolzen werden und vorzugsweise etwas über den Bereich hinaus (Fig. 3).

Ebenso ist es aber möglich, das Umschmelzen nur stellenweise innerhalb des Oberflächenbereichs 8 durchzuführen, in dem die Auftragsschweißung 13 erzeugt werden soll.

Das ist z.B. bei kolumnar erstarrten Körnern der Fall. So ist es z.B. in Figur 5 dargestellt, bei dem eine überschaubare Anzahl von Korngrenzen 19', 19" in dem auftragszuschweißenden Oberflächenbereich 8 vorhanden sind, so dass das Umschmelzverfahren vorzugsweise nur entlang der Korngrenzen 19', 19" durchgeführt wird. So umschließt ein Umschmelzbereich 7', 7" vorzugsweise nur Korngrenzen 19', 19".

In dem auftragszuschweißenden Oberflächenbereich 8 können ein oder mehrere Korngrenzen vorhanden sein.

Ebenso ist es möglich, wie in Figur 6 dargestellt, nur entlang der äußeren Kontur 22 des Oberflächenbereichs 8 des Umschmelzbereichs 7, 7' umzuschmelzen, so dass hier eine Umrandung des Oberflächenbereichs 8 der Auftragsschweißung den Umschmelzbereich 7, 7' darstellt.

Die Vorgehensweise von Figur 5 und Figur 6 können auch miteinander kombiniert werden.

Es können polykristalline oder gerichtet erstarrte Substrate 4 polykristallin und gegebenenfalls gerichtet erstarrt umgeschmolzen werden.

Ebenso kann das Verfahren angewendet werden, wenn eine Mulde 16 oder eine Vertiefung 16 aufgefüllt werden muss, wobei dann der Boden der Mulde 16 umgeschmolzen (Fig. 4) wird und ein umgeschmolzener Bereich 7' entsteht. Ebenso können in der Mulde 16 nur Korngrenzen 19', 19" gemäß Figur 5 umgeschmolzen werden.

Durch die Vorgehensweise gemäß Figuren 3 bis 7 werden Spannungen in dem Übergang zwischen Auftragsschweißung 13 und der Oberfläche 22, insbesondere im Übergangsbereich im Bereich der Kanten deutlich reduziert.

## Patentansprüche

1. Verfahren zum Auftragsschweißen,
bei dem zumindest stellenweise in einem Oberflächenbereich (8) unter einer Oberfläche (22) eines Substrats (4),
auf dem (8) eine Auftragsschweißung (13) erzeugt werden soll,
ein Umschmelzbereich (7, 7') im Substrat (4) erzeugt wird und
dass dann eine Auftragsschweißung (13) auf dem Umschmelzbereich (7, 7') erfolgt.

2. Verfahren nach Anspruch 1,
bei dem der Umschmelzbereich (7) den gesamten Oberflächenbereich (8) umfasst,
insbesondere bei dem der Umschmelzbereich (7) nur den gesamten Oberflächenbereich (8) umfasst,
auf dem die Auftragsschweißung (13) erzeugt wird.

3. Verfahren nach Anspruch 1,
bei dem der Umschmelzbereich (7) die äußere Kontur (22) des Oberflächenbereichs (8) umfasst,
auf dem die Auftragsschweißung (13) erzeugt wird.

4. Verfahren nach einem oder mehreren der Ansprüche 1 bis 3,
bei dem der Umschmelzbereich (7) deutlich größer ist als eine Grundfläche der Auftragsschweißung (13) und insbesondere bei dem der Umschmelzbereich (7) die Auftragsschweißung (13) vollständig umfasst.

5. Verfahren nach einem oder beiden der Ansprüche 1 oder 3, bei dem ein Umschmelzbereich (7) Korngrenzen (19', 19") einer kolumnar erstarrten Struktur oder Kleinwinkelkorngrenzen einer einkristallinen Struktur umfasst,
insbesondere bei dem ein Umschmelzbereich (7) nur Korngrenzen (19', 19") einer kolumnar erstarrten Struktur oder Kleinwinkelkorngrenzen einer einkristallinen Struktur umfasst.

6. Verfahren nach einem oder mehreren der Ansprüche 1, 3 oder 5,
bei dem nur stellenweise die Oberfläche (22) umgeschmolzen wird,
in der die Auftragsschweißung (13) erzeugt wird.

7. Verfahren nach einem oder mehreren der Ansprüche 1, 2, 3, 5 oder 6,
bei dem die Auftragsschweißung (13) innerhalb einer Mulde (16) aufgetragen wird.

8. Verfahren nach einem oder mehreren der Ansprüche 1 bis 7,
bei dem das Substrat (4) eine gerichtete erstarrte Struktur,
insbesondere eine kolumnar erstarrte Struktur,
ganz insbesondere eine einkristalline Struktur,
aufweist.

9. Verfahren nach einem oder mehreren der Ansprüche 1 bis 7,
bei dem das Substrat (4) polykristallin ausgebildet ist.

10. Verfahren nach einem oder mehreren der Ansprüche 1 bis 9,
bei dem der Umschmelzbereich (7, 7', ...) gerichtet erstarrt wird.

11. Verfahren nach einem oder mehreren der Ansprüche 1 bis 9,
bei dem der Umschmelzbereich (7, 7', ...) polykristallin erstarrt wird.

12. Verfahren nach einem oder mehreren der Ansprüche 1 bis 11,
bei dem ein Laser zum Umschmelzen verwendet wird.

13. Verfahren nach einem oder mehreren der Ansprüche 1 bis 12,
bei dem ein Laserauftragsschweißen verwendet wird.

14. Verfahren nach einem oder mehreren der vorhergehenden Ansprüche,
bei dem die Auftragsschweißung erst erfolgt,
wenn der Umschmelzbereich (7, 7', ...) vollständig erzeugt wurde.

15. Bauteil (1, 120, 130),
insbesondere hergestellt nach einem oder mehreren der vorhergehenden Ansprüche,
das zumindest teilweise einen Umschmelzbereich (7, 7', 7") aufweist,
auf dem eine Auftragsschweißung (13) vorhanden ist.

16. Bauteil nach Anspruch 15,
bei dem der Umschmelzbereich (7, 7', 7") zumindest vollständig die Fläche der Auftragsschweißung (13) umfasst.

17. Bauteil nach Anspruch 15,
bei dem der Umschmelzbereich (7', 7", 7"') nur teilweise die Fläche umfasst,
auf der die Auftragsschweißung (13) vorhanden ist.

18. Bauteil nach einem oder mehreren der vorhergehenden Ansprüche 15, 16 oder 17,
dessen Substrat (4) eine gerichtet erstarrte Struktur, insbesondere eine kolumnar erstarrte Struktur,
ganz insbesondere eine einkristalline Struktur,
aufweist.

19. Bauteil nach einem oder mehreren der Ansprüche 15, 16 oder 17,
das ein polykristallines Substrat aufweist.

20. Bauteil nach einem oder mehreren der Ansprüche 15, 16, 17 oder 18,
bei dem der Umschmelzbereich (7', ...) gerichtet erstarrt ist.

21. nach einem oder mehreren der Ansprüche 15, 16, 17, 18 oder 19,
bei dem der Umschmelzbereiche (7', ...) polykristallin ist.
